# EUROPEAN PATENT APPLICATION

(11) **EP 4 801 172 A1**
(43) Date of publication of application: **02.09.2026**
(21) Application number: 24893224.6
(22) Date of filing: 04.11.2024
(51) Int. Cl.: H04W 72/40

(54) **COMMUNICATION METHOD, AND APPARATUS**

(30) Priority: 20.11.2023 CN 202311555386
(71) Applicant: Huawei Technologies Co., Ltd., Shenzhen, Guangdong 518129 (CN)
(72) Inventor: XU, Jiaojiao, Shenzhen, Guangdong 518129 (CN); ZHANG, Yi, Shenzhen, Guangdong 518129 (CN); SU, Hongjia, Shenzhen, Guangdong 518129 (CN); QI, Hong, Shenzhen, Guangdong 518129 (CN)
(74) Representative: Körber, Martin Hans
(86) International application number: PCT/CN2024/129671
(87) International publication number: WO 2025/108066

(57) **Abstract**

A communication method and apparatus are provided, applicable to fields such as V2X, Internet of Vehicles, intelligent driving, or intelligent connected vehicles. The communication method includes: determining, by a first terminal apparatus, a busy rate of a first beam in a first beam set, determining first information based on the busy rate, and sending the first information to a second terminal apparatus, where the first beam is used for communication between the first terminal apparatus and the second terminal apparatus. The busy rate of the first beam is used to indicate a resource busyness degree of a first time window on the first beam. The first information is used to determine whether the first beam fails. The method determines whether a beam fails based on the busy rate of resources on the beam. For the first terminal apparatus, by configuring a set of resources for BFD, the first terminal apparatus can determine which beams fail on the SL of the first terminal apparatus, without the need to configure multiple sets of resources for BFD, thereby saving system resources and improving the resource utilization of the entire system.

## Description

### CROSS-REFERENCE TO RELATED APPLICATIONS

This application claims priority to Chinese Patent Application No. 202311555386.8, filed with the China National Intellectual Property Administration on November 20, 2023, and entitled "Communication Method and Apparatus," which is incorporated herein by reference in its entirety.

### Technical Field

This application relates to the sidelink (sidelink, SL) technology field, and in particular, to a communication method and apparatus.

### Background

The 5th generation (5th generation, 5G) mobile communication system supports communication in frequency range (frequency range, FR) 2 using beamforming technology. During the communication process between a transmit end and a receive end, a beam already selected by the transmit end or the receive end may no longer be applicable. For example, the link quality corresponding to the beam already selected or paired by the transmit end or the receive end is relatively poor, which is also referred to as a beam failure or a beam fault. When a beam failure occurs, the transmit end or the receive end may request beam failure recovery (beam failure recovery, BFR), so that the beams finally selected by the transmit end and the receive end are aligned, thereby ensuring communication quality.

A BFR mechanism between a network device and a terminal device over a Uu interface requires the network device to configure a resource set for beam failure detection (beam failure detection, BFD) and a candidate resource set for BFR. In a (sidelink, SL) system, beam failure may also occur between a transmit end and a receive end. If the BFR process in SL follows the BFR process over the Uu interface, then one end of the SL needs to configure the resource set for BFD and the candidate resource set for BFR for the other end. However, in an SL system, one transmit end may have multiple SL communications, and each SL communication needs to be configured with a set of resources for BFD and a candidate resource set for BFR. This would require configuring multiple sets of resources for BFD and multiple sets of candidate resource sets for BFR, which would consume a large amount of system resources and would not be conducive to efficient use of system resources.

### SUMMARY

Embodiments of this application provide a communication method and apparatus, to implement beam failure detection for a reference signal resource in a beam domain, thereby reducing resource overheads in a BFR process and improving resource utilization of a system.

To achieve the foregoing objectives, the embodiments of this application use the following technical solutions:
According to a first aspect, an embodiment of this application provides a communication method, which may be performed by a first communications apparatus. The first communications apparatus may be a terminal device, or the first communications apparatus may be a component configured to implement a function of the terminal device. For example, the first communications apparatus is a unit/module, a circuit, a chip, or the like inside the terminal device. The following describes the method provided in the first aspect by using an example in which the first communications apparatus is a first terminal apparatus. The first terminal apparatus may be a unit/module, a circuit, a chip, or the like inside the terminal device.

The communication method includes: determining, by a first terminal apparatus, a busy rate of a first beam in a first beam set, determining first information based on the busy rate, and sending the first information to a second terminal apparatus. The first beam is used for communication between the first terminal apparatus and the second terminal apparatus, or the first terminal apparatus may communicate with the second terminal apparatus by using the first beam. The busy rate of the first beam is used to indicate a resource busy degree of a first time window on the first beam. The first information is used to determine whether the first beam fails.

In this method, the first beam is a beam used for communication between the first terminal apparatus and the second terminal apparatus, and the first terminal apparatus may determine whether the first beam fails based on a resource busy rate on the first beam. Similarly, the first terminal apparatus may also measure other beams in the first beam set, to determine whether the other beams fail based on a resource busy rate on the other beams. In this method, whether a beam fails may be determined based on a resource busy rate on a beam domain. In this way, for the first terminal apparatus, the first terminal apparatus may determine which beams fail on at least one SL of the first terminal apparatus by configuring a set of resources for BFD for the first terminal apparatus. Compared with the method of using the BFD method on the Uu interface, which requires configuring multiple sets of resources for BFD, this method can save system resources and help improve resource utilization of the entire system.

A manner in which the first terminal apparatus determines the first information based on the busy rate includes but is not limited to the following several manners. Based on any one of the first information, whether the first beam fails may be determined, which is relatively flexible.

Manner 1: The first terminal apparatus determines the first information based on the busy rate, where the first information is used to indicate that the busy rate is higher than or equal to the first threshold when the busy rate is higher than or equal to the first threshold. The first threshold is (pre)configured or predefined.

In manner 1, the first terminal apparatus notifies the second terminal apparatus that the busy rate of the first beam is higher than or equal to the first threshold (that is, the first information), so that the second terminal apparatus determines, based on the received first information, whether the first beam fails. Manner 1 can reduce processing complexity of the first terminal apparatus, and can also reduce a probability of a beam failure misjudgment by the first terminal apparatus.

Manner 2: The first terminal apparatus determines the first information based on the busy rate, where the first information includes: when the busy rate is higher than or equal to the first threshold for a quantity of times that is higher than or equal to a first value within a preset time length, the first information indicates that the first beam fails. The first threshold is (pre)configured or predefined.

In manner 2, the first terminal apparatus may determine whether the first beam fails based on the quantity of times that the busy rate of the first beam is higher than or equal to the first threshold. The first threshold is (pre)configured or predefined. When the first beam fails, the first terminal apparatus sends the first information to the second terminal apparatus. Manner 2 can reduce processing complexity of the second terminal apparatus and save energy consumption.

Manner 3: The first information is the busy rate of the first beam, and the second terminal apparatus determines whether the first beam fails based on the busy rate of the first beam. For example, the second terminal apparatus determines whether the busy rate of the first beam is higher than the first threshold, and determines whether the first beam fails based on the number of times the busy rate of the first beam is higher than or equal to the first threshold. In manner 3, the first terminal apparatus does not need to determine whether the first beam fails based on the busy rate of the first beam, thereby reducing processing complexity.

In an implementation, the method further includes: the first terminal apparatus receives configuration information, where the configuration information is used to indicate a first beam set. When both the first terminal apparatus and the second terminal apparatus are located within the coverage of a same network device, the first beam set may be configured by the network device for the first terminal apparatus. Since the network device knows the resource situation within the system, configuring the first beam set by the network device can enable beam alignment between the first terminal apparatus and the second terminal apparatus.

In an implementation, the method further includes: the first terminal apparatus sends a reference signal by using a beam in the first transmit beam set; receives information about a second transmit beam set sent by the second terminal apparatus, and sends a reference signal by using a beam in the second transmit beam set, where the second transmit beam set is formed by some beams in the first transmit beam set; obtains a measurement result for at least one beam in the second transmit beam set, and determines the first beam set from the at least one beam based on the measurement result. In this method, the first terminal apparatus may determine the first beam set through a beam alignment process with the second terminal apparatus, thereby being able to determine the first beam set even when there is no network coverage available.

In an implementation, the method further includes: the first terminal apparatus receiving a beam failure recovery request from a second terminal apparatus on a first resource, and sending a response message to the second terminal apparatus for the beam failure recovery request. The first resource is associated with a second beam, where the busy rate of the second beam is below a second threshold. The second threshold may be the same as or different from the first threshold; for example, the second threshold is lower than the first threshold. The second beam is a beam without failure.

When the second terminal apparatus determines that the first beam has failed, it may request beam recovery from the first terminal apparatus. The second terminal apparatus may send a beam recovery request based on resources on the second beam to ensure the transmission reliability of the beam recovery request as much as possible, thereby improving the success rate of beam recovery.

According to a second aspect, an embodiment of this application provides a communication method, which may be performed by a second communication apparatus. The second communication apparatus may be a terminal device, or the second communication apparatus may be a component configured to implement a function of the terminal device. For example, the second communication apparatus may be an internal unit/module, a circuit, a chip, or the like of the terminal device. The following describes the method provided in the second aspect by using an example in which the second communication apparatus is a second terminal apparatus. The second terminal apparatus may be an internal unit/module, a circuit, a chip, or the like of the terminal device.

The communication method includes: receiving, by a second terminal apparatus, first information from a first terminal apparatus, and determining, based on the first information, whether a first beam fails. The first information is related to a busy rate of the first beam, where the busy rate indicates a degree of resource busyness in a first time window on the first beam, and the first beam is used for communication between the first terminal apparatus and the second terminal apparatus.

In an implementation, the first information indicates that the busy rate of the first beam is higher than or equal to a first threshold, the second terminal apparatus determining, based on the first information, whether the first beam fails includes: when the number of times the first information is received by the second terminal apparatus is greater than or equal to a first value, the second terminal apparatus determining that the first beam fails.

In an implementation, the first information indicates that the first beam fails.

In an implementation, the first information is the busy rate, the second terminal apparatus determining, based on the first information, whether the first beam fails includes: when the number of times the busy rate received by the second terminal apparatus is higher than or equal to a first threshold within a preset time length is greater than or equal to a first value, the second terminal apparatus determining that the first beam fails.

In an implementation, the first threshold is (pre)configured or predefined.

In an implementation, the method further includes:
receiving configuration information, wherein the configuration information is used to indicate a first beam set, and the first beam set includes the first beam.

In an implementation, the method further includes:
Measuring a first transmit beam set of the first terminal apparatus, and determining a second transmit beam set from the first transmit beam set based on a measurement result, wherein the second transmit beam set comprises some beams in the first transmit beam set;
Measuring the second set of transmit beams, and determining at least one beam from the second set of transmit beams based on the measurement results;
Measuring each of the at least one beam using different receive beams of the second terminal apparatus, and determining the first beam set from the at least one beam based on the measurement results.

In an implementation, the method further includes: the second terminal apparatus sends a beam failure recovery request to the first terminal apparatus on a first resource, and detects a beam failure recovery response from the first terminal apparatus. The first resource is associated with a second beam, where the busy rate of the second beam is below a second threshold.

In an implementation, the method further includes: determining, by the second terminal apparatus, a busy rate of a third beam in a third beam set, where the busy rate of the third beam indicates a degree of resource busyness within a first time window on the third beam, and the third beam set is a set of receive beams of the second terminal apparatus; and when the number of times that the busy rate of the third beam is greater than or equal to a first threshold within a preset duration is greater than or equal to a first value, sending, by the second terminal apparatus, a beam failure recovery request to the first terminal apparatus on a second resource, wherein the second resource is associated with a fourth beam, and the busy rate of the fourth beam is below a second threshold.

The third beam set is the receive beam set of the second terminal apparatus. As a receive end of the first terminal apparatus, the second terminal apparatus can measure the busy rate of each receive beam to determine which beam or beams have failed, and when a beam failure occurs, initiate a beam failure recovery request.

For beneficial effects of the second aspect and its implementations, refer to the effective effects of the first aspect and its implementations, which will not be repeated here.

According to a third aspect, an embodiment of this application provides a communication method, which may be performed by a second communication apparatus. The second communication apparatus may be a terminal device, or the second communication apparatus may be a component configured to implement functions of a terminal device. For example, the second communication apparatus may be an internal unit/module, a circuit, a chip, or the like of a terminal device. The following describes the method provided in the third aspect by using an example in which the second communication apparatus is a second terminal apparatus. The second terminal apparatus may be an internal unit/module, a circuit, a chip, or the like of a terminal device.

The communication method includes: determining, by a second terminal apparatus, a busy rate of a third beam in a third beam set, where the busy rate of the third beam indicates a degree of resource busyness within a first time window on the third beam, and the third beam set is a set of receive beams of the second terminal apparatus; and when the number of times that the busy rate of the third beam is greater than or equal to a first threshold within a preset duration is greater than or equal to a first value, sending, by the second terminal apparatus, a beam failure recovery request to the first terminal apparatus on a second resource, where the second resource is associated with a fourth beam, and the busy rate of the fourth beam is lower than a second threshold.

For beneficial effects of the third aspect and the implementations of the third aspect, refer to the beneficial effects of the second aspect and the implementations of the second aspect. Details are not described herein again.

According to a fourth aspect, an embodiment of this application provides a communications apparatus. The communications apparatus has a function of implementing behavior in any method example provided in the first aspect to the third aspect. For beneficial effects, refer to related descriptions of the first aspect to the third aspect. Details are not described herein again. For example, the communications apparatus may be a terminal device, or the communications apparatus may be an apparatus capable of supporting a terminal device in implementing a function required for implementing the method provided in the first aspect, the second aspect, or the third aspect, for example, the communications apparatus may be a chip or a chip system in the terminal device.

In a possible design, the communications apparatus includes a baseband apparatus and a radio frequency apparatus.

In a possible design, the communications apparatus includes corresponding means (means) or modules configured to perform the method in the first aspect, the second aspect, or the third aspect. For example, the communications apparatus includes a processing unit (sometimes also referred to as a processing module or a processor) and/or a transceiver unit (sometimes also referred to as a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, where the functional unit is referred to as a transceiver unit, and the functional unit can implement the sending function and the receiving function; or the sending unit and the receiving unit may be different functional units, and the transceiver unit is a general term for these functional units. These units (modules) may perform corresponding functions in the method examples in the first aspect, the second aspect, or the third aspect. For details, refer to the detailed descriptions in the method examples, and details are not described herein again.

According to a fifth aspect, an embodiment of this application provides a communication apparatus. The communication apparatus may be the communication apparatus in the fourth aspect in the foregoing embodiments, or may be a chip or a chip system disposed in the communication apparatus in the fourth aspect. The communication apparatus includes a communication interface and a processor, and optionally, further includes a memory. The memory is configured to store a computer program or instructions or data, and the processor is coupled to the memory and the communication interface. When the processor reads the computer program or instructions or data, the communication apparatus is enabled to perform the method performed by the terminal device in the foregoing method embodiments. For example, the communication apparatus may be a terminal device or a functional module in a terminal device, such as a baseband processor or a radio frequency chip.

According to a sixth aspect, an embodiment of this application provides a chip system. The chip system includes a processor, and may further include a communication interface, configured to implement the method according to any one of the first aspect to the third aspect. Optionally, the chip system further includes a memory. The memory is configured to store a computer program (which may also be referred to as code or instructions). The processor is configured to invoke and run the computer program from the memory, so that a device having the chip system installed performs the method according to any one of the first aspect to the third aspect and any one of its possible implementations. The chip system may include a chip, or may include the chip and other discrete components.

According to a seventh aspect, an embodiment of this application provides a communications apparatus, where the communications apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to any one of the first aspect to the third aspect.

In a specific implementation process, the communication apparatus may be a chip, the input circuit may be an input pin, the output circuit may be an output pin, and the logic circuit may be a transistor, a gate circuit, a trigger, or various logic circuits. An input signal received by the input circuit may be received and input by, for example, but not limited to, a receiver, a signal output by the output circuit may be output to, for example, but not limited to, a transmitter and then transmitted by the transmitter, and the input circuit and the output circuit may be a same circuit, where the circuit is used as the input circuit and the output circuit at different moments. A specific implementation of the input/output interface and the logic circuit is not limited in this application.

In an implementation, when the communications apparatus is a wireless communications device, the wireless communications device may be a terminal device such as a mobile phone. The interface circuit may be a radio frequency processing chip in the wireless communications device, and the processing circuit may be a baseband processing chip in the wireless communications device.

According to an eighth aspect, an embodiment of this application provides a communications system, where the communications system includes a first terminal apparatus and a second terminal apparatus, the first terminal apparatus is configured to implement a function of the method according to the first aspect, and the second terminal apparatus is configured to implement a function of the method according to the second aspect; or the first terminal apparatus is configured to implement a function of the method according to the first aspect, and the second terminal apparatus is configured to implement a function of the method according to the third aspect.

According to a ninth aspect, an embodiment of this application provides a computer-readable storage medium, where the computer-readable storage medium is configured to store a computer program or instructions, and when the computer program or the instructions are run, the method according to any one of the first aspect to the third aspect and any possible implementation of the first aspect to the third aspect is implemented.

According to a tenth aspect, an embodiment of this application further provides a computer program product comprising instructions. When the computer program product runs on a computer, the method according to any one of the first aspect to the third aspect and any possible implementation thereof is implemented.

For beneficial effects of the fourth aspect to the tenth aspect and the implementations thereof, refer to the descriptions of the beneficial effects of the first aspect to the third aspect and any possible implementation thereof.

### Brief Description of the Drawings

FIG. 1 is a schematic diagram of a communications system according to an embodiment of this application;
FIG. 2A is a schematic diagram of a P-1 process of beam sweeping according to an embodiment of this application;
FIG. 2B is a schematic diagram of a P-2 process of beam sweeping according to an embodiment of this application;
FIG. 2C is a schematic diagram of a P-3 process of beam sweeping according to an embodiment of this application;
FIG. 3 is a schematic flowchart of a communication method 300 according to an embodiment of this application;
FIG. 4 is a schematic diagram of a structure of a communications apparatus according to an embodiment of this application;
FIG. 5 is a schematic diagram of another structure of a communications apparatus according to an embodiment of this application.

### Specific Implementation

For the BFR of the SL, an embodiment of this application proposes that a terminal apparatus may determine whether a beam fails based on a resource busy/congestion degree in a beam domain. In this way, for a terminal apparatus, a set of resources configured for BFD can be used to determine which beams fail on multiple SLs of the terminal apparatus. Compared with a method of using the BFD method on the Uu interface, which requires configuring multiple sets of resources for BFD, this method can save system resources and help improve resource utilization of the entire system. The following further describes the solutions provided in the embodiments of this application with reference to the accompanying drawings.

The method provided in the embodiments of this application is applicable to a sidelink communication scenario or SL communication. A sidelink is a link established between devices of a same type, and the sidelink may also be referred to as a direct link, a side link, a side link, a secondary link, or the like. Devices of a same type refer to devices involved in evaluation performed based on devices of the same type. For example, devices of a same type include devices with the same or similar functions, and devices with the same or similar application scenarios. For example, the first terminal apparatus and the second terminal apparatus are devices of a same type, the first relay device and the second relay device are devices of a same type, and the first network device and the second network device are devices of a same type.

The sidelink in the embodiments of this application may be a sidelink in a 3rd Generation Partnership Project (3rd generation partnership project, 3GPP) related communications system, or may be a sidelink in another similar communications system. The 3GPP related communications system includes a Long Term Evolution (long term evolution, LTE) communications system, a new radio (new radio, NR) mobile communications system, or may be applied to another next generation mobile communications system, for example, a sixth generation (the sixth generation, 6G) communications system. Another similar communications system may include a wireless fidelity (wireless fidelity, WIFI) system, an internet of everything (vehicle to everything, V2X) system, an internet of things (internet of things, IoT) system, a narrow band internet of things (narrow band internet of things, NB-IoT) system, or the like.

For ease of description, the following uses a typical application scenario of sidelink, namely V2X, as an example. V2X includes direct communication between vehicle-to-vehicle (V2V), vehicle-to-infrastructure (V2I), vehicle-to-pedestrian (V2P), and vehicle-to-network (V2N) or vehicle-to-anything V2X. For example, V2X links include Rel-14, Rel-15, Rel-16, Rel-17, and V2X links of other future versions such as Rel-18. V2V refers to communication between vehicles; V2P refers to communication between a vehicle and a person (including a pedestrian, a cyclist, a driver, or a passenger); V2I refers to communication between a vehicle and an infrastructure, where the infrastructure is, for example, a road side unit (RSU) or a network device. The RSU includes two types: an RSU of a terminal type, which is an immobile terminal because it is deployed on the roadside, and therefore mobility does not need to be considered. For example, the terminal apparatus in this embodiment of this application may be an RSU; and an RSU of a base station type, which can provide a vehicle communicating with the RSU with timing synchronization and resource scheduling. V2N refers to communication between a vehicle and a network device.

In the embodiments of this application, the network apparatus refers to a RAN device. The RAN may be a 3GPP-related cellular system, or may be an open access network (open RAN, O-RAN, or ORAN), a cloud radio access network (cloud radio access network, CRAN), a virtualized radio access network (virtualized RAN, vRAN), or the like. The RAN may also be a communication system formed by the convergence of two or more of the above systems. The RAN device may also be referred to as a RAN node, a RAN entity, an access node, or the like.

In a possible scenario, a RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6G mobile communication system, a base station in a future mobile communication system, or the like. The RAN node may be a macro base station, a micro base station, an indoor unit, a relay node, a donor node/dormant node, a radio controller, or the like. The RAN node may also be a server, a wearable device, a vehicle, an in-vehicle device, an RSU, or the like.

In another possible scenario, a RAN node may be a module or unit that performs some functions of a base station; or multiple RAN nodes may collaborate to assist a terminal device in achieving wireless access, with different RAN nodes each implementing some functions of the base station. For example, a RAN node may be a central unit (CU), a distributed unit (DU), a radio unit (RU), or the like.

In the embodiments of this application, the network apparatus may be a device (which may be referred to as a network device) provided with the network apparatus, or may be the network apparatus itself. For example, the network apparatus may be a chip system or a combined component or part that can implement a function of a network device, and the apparatus may be installed in a network device. The embodiments of this application do not limit the specific technology or the specific device form used by the network apparatus.

In the embodiments of this application, any device that can perform data communication with a network apparatus may be considered as a terminal apparatus. The terminal apparatus is also referred to as a terminal, user equipment (user equipment, UE), a mobile station, a mobile terminal, or the like. The terminal apparatus may be widely applied to various scenarios, for example, sensing scenarios, device-to-device (device to device, D2D) communication, V2X communication, machine type communication (machine-type communication, MTC), IoT, virtual reality (virtual reality, VR), augmented reality (augmented reality, AR), industrial control, self-driving, telemedicine, smart grid, smart home, smart office, smart wearable, smart transportation, or smart city.

For example, the terminal device may be a mobile phone, a computer, a mobile internet device (mobile internet device, MID), a wearable device, a VR device, an AR device, a robot arm, a camera, a robot, or a smart home device (for example, a television, an air conditioner, a floor sweeping robot, a sound box, or a set-top box), a relay (relay), a customer premises equipment (CPE), an intelligent vehicle (smart car or intelligent car), a digital vehicle (digital car), an unmanned vehicle (unmanned car, driverless car, pilotless car, or automobile), an automatic vehicle (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), a road side unit (RSU), or the like. The terminal device may alternatively be a terminal device in an IoT system, for example, a water meter or an electricity meter.

The various terminal apparatuses described above may be considered as vehicle-mounted terminal apparatuses if they are located on a vehicle (for example, placed inside the vehicle or installed inside the vehicle). The vehicle-mounted terminal apparatus may be built into an in-vehicle module, an in-vehicle assembly, an in-vehicle component, an in-vehicle chip, or an on board unit (OBU) of the vehicle as one or more components or units, and the vehicle may implement the methods in this application by using the built-in in-vehicle module, in-vehicle assembly, in-vehicle component, in-vehicle chip, or OBU. The vehicle-mounted terminal apparatus may be an entire vehicle device, an in-vehicle module, a vehicle, an on board unit (OBU), a roadside unit (RSU), a telematics system (or referred to as an in-vehicle sending unit) (telematics box, T-box), a chip, a system on chip (SOC), or the like. The chip or the SOC may be installed in a vehicle, an OBU, an RSU, or a T-box.

In the embodiments of this application, the terminal apparatus may be a device (which may be referred to as a terminal device) provided with the terminal apparatus, or may be the terminal apparatus itself. For example, the terminal apparatus may be a chip system or a combined component or part that can implement a function of a terminal device, and the apparatus may be installed in a terminal device. A specific technology and a specific device form used by the terminal apparatus are not limited in embodiments of this application.

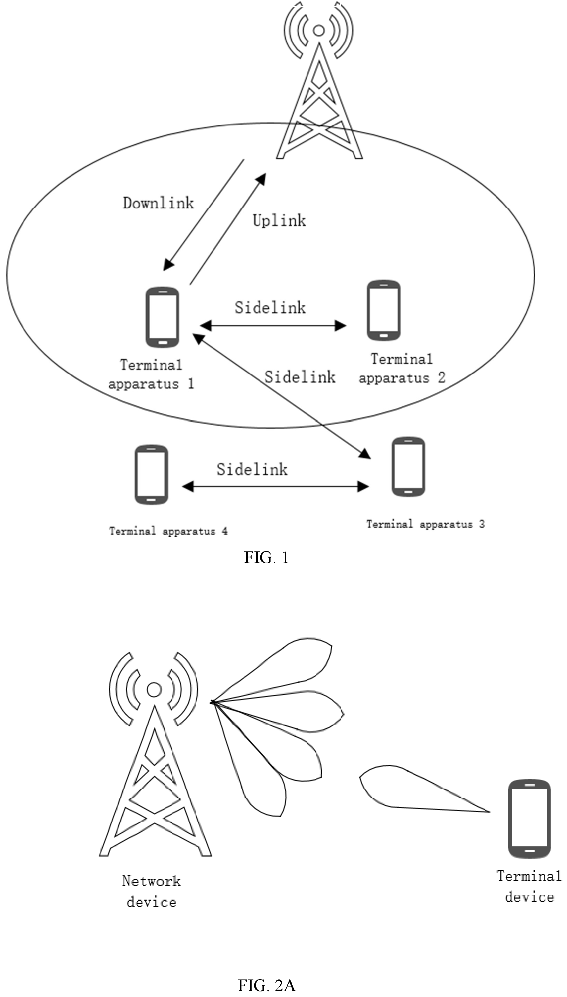

The terminal apparatus may be located within the coverage area of the network apparatus, or may be located outside the coverage area of the network apparatus. A terminal apparatus within the coverage area may also perform direct communication with a terminal apparatus outside the coverage area. For example, FIG. 1 is a schematic diagram of a communication system to which an embodiment of this application is applicable.

Referring to FIG. 1, FIG. 1 is a schematic diagram of an architecture of a communication system according to an embodiment of this application. The communication system may include a plurality of communication apparatuses, where the plurality of communication apparatuses may include a network apparatus and a terminal apparatus, or may include only a terminal apparatus. FIG. 1 uses one network apparatus and four terminal apparatuses (for example, a terminal apparatus 1, a terminal apparatus 2, a terminal apparatus 3, and a terminal apparatus 4) as an example. The four terminal apparatuses may all be located within the coverage area of the network apparatus, or all the four terminal apparatuses may be located outside the coverage area of the network apparatus, or some of the four terminal apparatuses may be located within the coverage area of the network apparatus, and the other terminal apparatuses may be located outside the coverage area of the network apparatus. For example, in FIG. 1, the terminal apparatus 1 and the terminal apparatus 2 are located within the coverage area of the network apparatus, and the terminal apparatus 3 and the terminal apparatus 4 are located outside the coverage area of the network apparatus. The network apparatus may send information to the terminal apparatus 1 through a downlink, the terminal apparatus 1 may send information to the network apparatus through an uplink, and the terminal apparatus 1 and the terminal apparatus 2 may perform direct communication through a sidelink. The terminal apparatus 1 and the terminal apparatus 3 may perform direct communication through a sidelink. The terminal apparatus 4 and the terminal apparatus 3 may perform direct communication through a sidelink.

The network architecture and application scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of new application scenarios, the technical solutions provided in embodiments of this application are also applicable to similar technical problems.

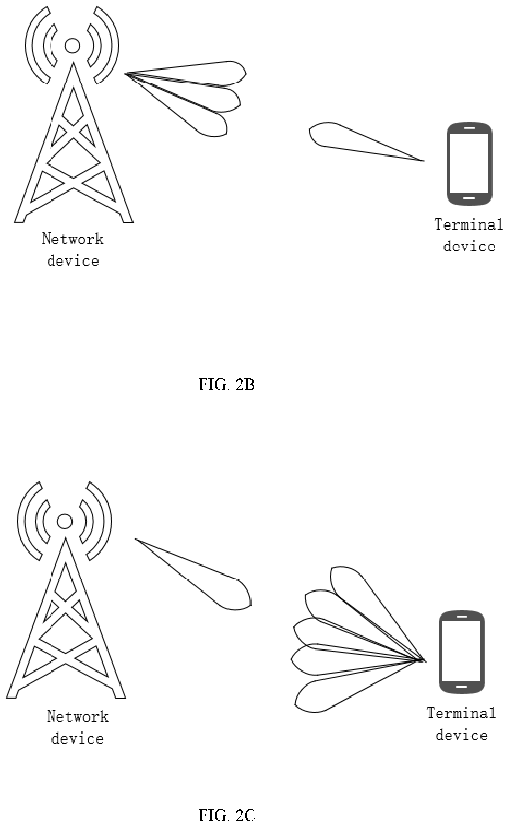

NR supports communication within an FR2. In an FR2, a device may send signals through a plurality of beams. A transmit end and a receive end need to use specific beams for transmission to ensure communication quality. Based on this, NR proposes beam management, so that the transmit end and the receive end obtain and maintain a beam set used for sending and receiving. Using an example in which the transmit end and the receive end are a terminal device and a network device, beam management includes a beam sweeping process. According to the working status, the beam sweeping process may be divided into three states, and operations of each state are summarized as follows:
P-1: The terminal device measures the transmit beam set of the network device, and selects a transmit beam of the network device and a receive beam of the terminal device from the transmit beam set. For this, refer to FIG. 2A, which is a schematic diagram of P-1. The transmit beam set of the network device is referred to as a transmit beam set of the network device for short.
P-2: Based on the beam selected in P-1, the terminal device measures a beam set (a fine beam) sent by a smaller network device, to improve a transmit beam of the network device. The beam set sent by the smaller network device may include some beams in the beams selected in P-1. For this, refer to FIG. 2B, which is a schematic diagram of P-2.
P-3: The terminal device measures the same transmit beam improved in P-2 by using different receive beams, to improve a receive beam of the terminal device. For this, refer to FIG. 2C, which is a schematic diagram of P-3.

In a communication process between the transmit end and the receive end, a beam already selected by the transmit end or the receive end may no longer be applicable. For example, the link quality corresponding to the beam is relatively poor. This case is also referred to as a beam failure or a beam fault. When a beam failure occurs, the transmit end or the receive end may request beam failure recovery (beam failure recovery, BFR), so that beams finally selected by the transmit end and the receive end are aligned, thereby ensuring communication quality.

Taking the BFR (Beam Failure Recovery) process over the air interface (i.e., Uu interface) as an example, this BFR process includes the following four steps:
1. BFD: The base station configures a set of periodic reference signal resources with quality class 0 (q0) through signaling or information element "Beam-Failure-Detection-RS-ResourceConfig" for beam failure detection signals. The UE measures the link quality of the q0 signal and compares it with the threshold Qout,LR. If the measured link quality is below the threshold Qout,LR for multiple measurements, a beam failure is considered to have occurred. The number of these measurements is determined by the maximum number of beam failure instances (beamFailureInstanceMaxCount). The UE reports the beam failure indication from the physical layer to the Media Access Control (MAC) layer. The threshold Qout,LR can be determined through RLM-IS-OOS-thresholdConfig. If the number of beam failure instances reported by the physical layer is greater than or equal to beamFailureInstanceMaxCount within the beamFailureDetectionTimer time, the UE determines that a beam failure has occurred. The reference signal may be a channel state information reference signal (CSI-RS).
   When the base station is not configured with q0, the UE uses the transmission configuration indicator (TCI) - state (States) physical downlink control channel (PDCCH) information to search for a periodic CSI-RS or synchronization signal and physical broadcast channel (SSB) block (Synchronization Signal/PBCH Block, SSB) that has a quasi co-location (QCL) relationship as a measurement signal.
2. New Beam Identification: The base station configures a set of CSI-RS resources or SSB resources for candidateBeamRSList with a quality of q1 to measure the quality of the candidate beam link; the UE measures the link quality of the signal measurement link for q1 and compares the measured link quality with the threshold rSRP-ThresholdSSB. When the measured link quality is higher than the threshold rSRP-ThresholdSSB, the beam corresponding to the measured link quality is reported as a new beam to the MAC layer.
3. Beam Failure Recovery Request (BFRQ): The MAC layer of the UE receives a beam failure indication and a candidate beam indication from the PHY layer, and then sends a BFRQ on the physical random access channel (PRACH) resource configured by the base station. This PRACH resource is associated with the CSI-RS resource and/or SSB identified by the candidate beam identifier. After the MAC layer of the UE sends the PRACH, the beamFailureRecoveryTimer timer is started.
4. Beam Failure Recovery Response (BFRR): The UE begins monitoring the base station's BFRR on the PDCCH starting from four slots after sending the PRACH, where the size of the monitoring window is configured by higher layers. If the UE does not receive the base station's BFRR before the beamFailureRecoveryTimer expires, a BFRQ Failure is reported to the higher layer. If the base station's BFRR is received on the specified PDCCH control resource set (CORESET), the timer is stopped.

It can be seen that in the BFR process over the Uu interface, the base station configures q0 and q1. Similar to the Uu interface, when the beams selected by the two communication ends of the SL communication are no longer suitable, either the transmitting or receiving end of the SL communication may request a BFR, so that the beams finally selected by the transmitting and receiving ends are aligned, thereby ensuring communication quality.

There are mainly two resource allocation modes for SL: one is the resource allocation mode (mode-1) where the network device allocates resources, and the other is the resource selection mode (mode-2) where the terminal device autonomously selects resources. Mode-1 is primarily applied to V2X communication in scenarios with network coverage, where the base station allocates resources to each terminal device. Under mode-2, the transmission resources of the terminal device do not depend on the network device, and this mode is not limited by network coverage. Regardless of whether there is network coverage, the terminal device can communicate using this mode. The embodiments of this application mainly focus on mode-2, therefore, the following mainly describes mode-2, while mode-1 will not be discussed in detail.

In SL, mode-2 refers to a case where the network may pre-allocate one or more resource pools, and the terminal device may autonomously select an available resource from the one or more resource pools. A resource pool is a set of time-frequency resources used by the terminal device for sidelink communication. The resource pool includes one or more frequency domain units in frequency domain. The frequency domain unit may be a resource element (resource element, RE), a resource block (resource block, RB), a subchannel, a carrier (carrier), a bandwidth part (BWP), or the like. For ease of description, in the embodiments of this application, an example in which the frequency domain unit is a subchannel is used, unless otherwise specified. The resource pool includes one or more time units in time domain. The time unit may be a symbol, a slot (slot), a mini-slot (mini-slot), a subframe, a frame, a half subframe, a half frame, or the like. The one or more time units may be consecutive in time, or may be discrete in time.

In mode-2, the terminal device autonomously selects available resources, and therefore, unified scheduling and control cannot be performed, which may easily cause congestion. To address this, a congestion control mechanism is introduced. Specifically, each terminal device measures a channel busy ratio (CBR) and a channel occupancy ratio (CR), and adjusts the CR based on a configured CBR threshold, thereby limiting the resource occupancy rate of each terminal device and reducing congestion.

The CBR represents the degree of channel busyness/congestion over a period of time, and is the proportion of resources within a resource segment where the received signal strength indicator (RSSI) is greater than a certain RSSI threshold, relative to the total resources in that segment. Taking the CR window [n - a, n - 1] as an example, the CBR is the ratio of the number of sub-channels in the [n - a, n - 1] measured by the terminal device that exceed the RSSI threshold to the total number of measured sub-channels. The CR indicates the degree of channel occupancy of the terminal device within the CR window, and is the ratio of the number of sub-channels already transmitted and the number of sub-channels to be transmitted in the future by the transmitting terminal device to the total number of sub-channels in the CR window. For example, the CR is the ratio of the number of sub-channels already transmitted by the transmitting terminal device in the CR window [n - a, n - 1] and the number of sub-channels to be transmitted in the future window [n, n + b] to the total number of sub-channels in the CR window. The terminal device performs SL transmission when the terminal device meets the following constraint; otherwise, the terminal device does not perform SL transmission. The constraint is: ∑_{i≥k} CR(i) ≤ CR_{Limit}(k) , where CR(i) represents the CR of a physical sidelink control channel (PSSCH) transmission with a slotn - N priority of i, N is the congestion control processing time, and CR_{Limit}(k) represents a CR constraint, which is related to the priority k and the CBR of the slot n - N.

Currently, there is no corresponding solution for the BFR process in SL. If the BFR process in SL follows the BFR process in the Uu interface, then one end of the SL communication needs to configure a reference signal resource for BFD and a candidate resource set for new beam identification for the other end. However, in an SL distributed system, one terminal device may have multiple SLs, and one terminal device needs to configure reference signal resources for BFD and candidate resource sets for new beam identification for each of multiple terminal devices, that is, multiple sets of reference signal resources for BFD and multiple sets of candidate resource sets for new beam identification need to be configured, which consumes a large amount of system resources and is not conducive to the resource utilization of the entire system.

In view of this, the solutions provided in the embodiments of this application are provided. Considering that resources selected based on mode-2 at both ends of SL communication have directionality, and the busy/congestion degrees vary in different beam directions, therefore, in this embodiment of this application, a CBR of a reference signal resource in a beam domain is measured based on a beam direction. If the CBR of the reference signal resource in each beam direction is all lower than a certain threshold, then a fault exists in the beam direction, that is, the beam fails. The method provided in this embodiment of this application can implement beam failure detection for the reference signal resource in the beam domain. In this way, in an SL distributed system, for any terminal device, there is no need to configure multiple sets of reference signal resources dedicated to BFD and multiple sets of candidate resource sets for new beam identification, thereby saving system resources and improving the resource utilization of the entire system. In addition, according to the method provided in this embodiment of this application, there is no need to perform a complex link-level reference signal processing and determining process, thereby simplifying the BFD procedure.

In the embodiments of this application, the beam may be replaced with a beam direction, a beam index (index information), a reference signal, a reference signal index (index information), a reference signal resource, a reference signal resource index (index information), spatial filtering information, a spatial filtering parameter, a QCL indication, or a TCI state. The reference signal is an SL reference signal, and includes but is not limited to SL CSI-RS. For example, the reference signal may alternatively be one or more of the following: SL demodulation reference signal (demodulation reference signal, DM-RS), SL phase tracking reference signal (phase-tracking reference signals, PT-RS), a sidelink synchronization signal and physical broadcast channel block/sidelink synchronization signal block (sidelink synchronization signal and PBCH block, S-SSB), a sidelink primary synchronization signal (sidelink primary synchronization signal, S-PSS) and/or a sidelink secondary synchronization signal (sidelink secondary synchronization signal, S-SSS) in the S-SSB, or another possible reference signal.

Preset configuration, or preconfiguration, may refer to predefinition, radio resource control (radio resource control, RRC) configuration, downlink control information (downlink control information, DCI) indication, sidelink control information (sidelink control information, SCI) indication, MAC control element (control element, CE) indication, or determining based on a configuration or an indication. If there is no configuration or indication, one or more of the default values are used. Herein, the SCI is a first-level SCI and/or a second-level SCI.

In various embodiments of this application, "when" and "if" mean that an apparatus performs corresponding processing under an objective condition, and do not limit time, and do not require that an apparatus necessarily perform a determining action when implementing these embodiments, and do not mean that there are other limitations. Unless otherwise specified, "if" and "when" may be replaced with each other, and "when" and "in a case of" may be replaced with each other. "When" and "if"/"when" may be replaced with each other. In embodiments of this application, unless otherwise specified, a number of nouns indicates "a singular noun or a plural noun", that is, "one or more". "At least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates "A or B". "At least one of the following" or a similar expression thereof refers to any combination of these items, including any combination of one item or a plurality of items. For example, "at least one of a, b, or c" means "a, b, c, a and b, a and c, b and c, or a, b, and c", where a, b, and c may be singular or a plurality of items.

The ordinal numbers such as "first" and "second" mentioned in the embodiments of this application are used to distinguish between a plurality of objects, and are not intended to limit a size, content, sequence, time sequence, priority, or importance degree of the plurality of objects. For example, first information and second information refer to two different pieces of information, and do not indicate that the content, priority, or importance degree of the two pieces of information is different. For a technical feature, technical features in the technical feature are distinguished by using terms such as "A," "B," "C," and "D." There is no sequence or order of importance between the technical features described by "A," "B," "C," and "D." For example, case A and case B in this specification are merely used to distinguish between different timers, and do not limit a priority or an importance degree between case A and case B.

The following describes in detail the solutions provided in the embodiments of this application with reference to the accompanying drawings. In the following description, an example in which the beam failure recovery method provided in the embodiments of this application is applied to the network architecture shown in FIG. 1 and is applied to a sidelink transmission scenario is used. The network architecture and application scenarios described in the embodiments of this application are intended to describe the technical solutions in the embodiments of this application more clearly, and do not constitute a limitation on the technical solutions provided in the embodiments of this application. A person of ordinary skill in the art may know that, with evolution of the network architecture and emergence of new application scenarios, the technical solutions provided in the embodiments of this application are also applicable to similar technical problems.

The communication method provided in the embodiments of this application may be performed by a first communication apparatus or a second communication apparatus. Both the first communication apparatus and the second communication apparatus may be terminal apparatuses or communication apparatuses that can support a terminal apparatus in implementing a function required for the method, or certainly may be another communication apparatus, for example, a chip system. In the embodiments of this application, the terminal apparatus may be a terminal device, or may be a component applied to a terminal device, for example, a processor, a chip, or a chip system, or may be a logical module or software that can implement all or some functions of the terminal device. For example, the terminal apparatus may be a chip (system) in the terminal device. For ease of description, the following uses an example in which the communication method is performed by a first terminal apparatus and a second terminal apparatus. If the embodiments of this application are applied to the network architecture shown in FIG. 1, the first terminal apparatus and the second terminal apparatus described below may be any one of the terminal apparatus 1 to the terminal apparatus 3 in the network architecture shown in FIG. 1. The terminal apparatus in FIG. 1 may perform communication when there is network infrastructure or when there is no network infrastructure.

It should be noted that the embodiments of this application use execution by the first terminal apparatus and the second terminal apparatus as an example, and are not limited to the first terminal apparatus and the second terminal apparatus. For example, the embodiments of this application may also be performed by more terminal apparatuses. When more terminal apparatuses are involved, each of these terminal apparatuses performs the same procedure.

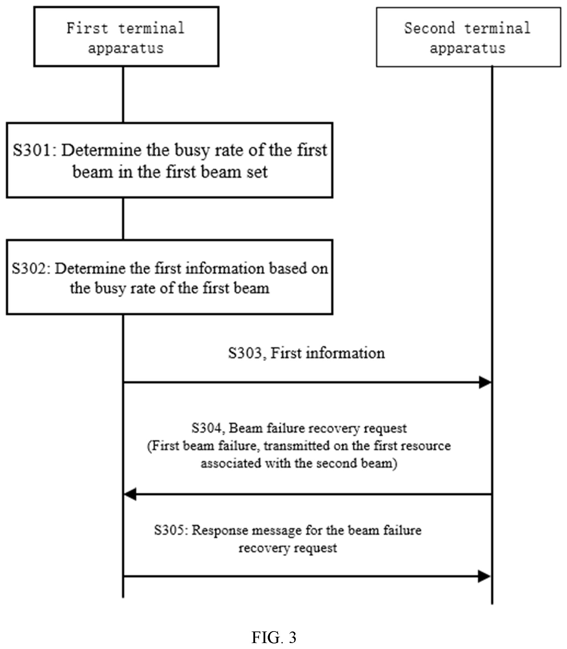

Please refer to FIG. 3, which is a schematic flowchart of a communication method 300 according to an embodiment of this application. FIG. 3 describes the method from the perspective of interaction between a first terminal apparatus and a second terminal apparatus. It should be understood that the communication method 300 may alternatively be implemented by another apparatus, for example, performed by a chip or a communications apparatus having a communication function. Any terminal apparatus may initiate a beam failure recovery procedure upon determining a beam failure. In FIG. 3, an example is used in which the first terminal apparatus measures a transmit beam set, notifies the second terminal apparatus of a measurement result, and the second terminal apparatus determines whether a beam failure occurs. As shown in FIG. 3, the procedure of the communication method 300 includes the following steps.

S301: The first terminal apparatus determines a busy rate of a first beam in a first beam set.

The first beam set is a set of transmit beams of the first terminal apparatus. The first terminal apparatus may communicate with at least one other terminal apparatus by using a beam in the first beam set. For example, the first terminal apparatus communicates with the terminal apparatus A by using beam A in the first beam set. The first terminal apparatus communicates with the communications apparatus B by using beam B in the first beam set. For ease of description, this specification uses an example in which the first terminal apparatus communicates with the second terminal apparatus by using the first beam in the first beam set. The first beam may be one or more beams in the first beam set.

There are the following two manners for determining the first beam set. This embodiment of this application imposes no limitation on which manner is used to determine the first beam set.

Manner 1: The network apparatus configures the first beam set for the first terminal apparatus.

It is assumed that the first terminal apparatus communicates with the second terminal apparatus, and both the first terminal apparatus and the second terminal apparatus are within the coverage area of the network apparatus. In this case, the network apparatus knows resource statuses of the first terminal apparatus and the second terminal apparatus. Therefore, the network apparatus may configure an appropriate first beam set for the first terminal apparatus, so that beam alignment is performed between the first terminal apparatus and the second terminal apparatus. For example, the network apparatus sends configuration information to the first terminal apparatus, where the configuration information is used to indicate the first beam set. Correspondingly, the network apparatus also sends configuration information to the second terminal apparatus, where the configuration information is used to indicate the first beam set. Using FIG. 1 as an example, the terminal apparatus 1 communicates with the terminal apparatus 2, and the network apparatus may configure the first beam set for the terminal apparatus 1 and the terminal apparatus 2.

Manner 2: The first terminal apparatus determines the first beam set by performing a beam alignment process with the second terminal apparatus.

For example, the first terminal apparatus sends a reference signal by using a beam in the first transmit beam set, and the second terminal apparatus measures the reference signal on each transmit beam in the first transmit beam set, or obtains measurement results of each beam. The second terminal apparatus may select a better beam from the first transmit beam set based on the obtained measurement result, and notify the first terminal apparatus of the selected beam. For example, the second terminal apparatus selects some beams in the first transmit beam set to form a second beam set, and the second terminal apparatus may send information about the second beam set to the first terminal apparatus. After receiving the information about the second transmit beam set from the second terminal apparatus, the first terminal apparatus sends a reference signal by using a beam in the second transmit beam set. The second terminal apparatus measures the reference signal on each transmit beam in the second transmit beam set, or obtains measurement results of each beam. The second terminal apparatus may determine a transmit beam of the second terminal apparatus based on the obtained measurement result. For example, the first terminal apparatus measures the transmit beam determined by the second terminal apparatus by using different receive beams, to determine a receive beam of the first terminal apparatus. For example, the first terminal apparatus may obtain a measurement result of at least one beam in the second transmit beam set, and determine the first beam set from the at least one beam based on the measurement result. Manner 2 is applicable to both a scenario with network coverage and a scenario without network coverage. Using FIG. 1 as an example, the first terminal apparatus is a terminal apparatus 1, and the second terminal apparatus may be a terminal apparatus 2, a terminal apparatus 3, or a terminal apparatus 4. For another example, the first terminal apparatus is a terminal apparatus 3, and the second terminal apparatus may be a terminal apparatus 4.

It is understandable that before communicating with another terminal apparatus (for example, the second terminal apparatus), the first terminal apparatus may select a resource based on mode-2 and communicate with the second terminal apparatus on the selected resource. The first terminal apparatus needs to listen to resources when selecting resources based on mode-2, which results in directional resource selection. The degree of resource busyness/congestion may vary in different directions. For example, a resource may be congested on beam 1 but not congested on direction 2. Based on this, embodiments of this application propose determining whether a beam fails based on the degree of resource busyness/congestion in a beam domain. In this way, for a terminal apparatus, configuring a set of resources for BFD can determine which beams fail on multiple SLs of the terminal apparatus. Compared with the method of using the BFD method on an Uu interface, which requires configuring multiple sets of resources for BFD, this method can save system resources and help improve resource utilization of the entire system.

The degree of resource busyness/congestion on a beam may be characterized by a busy rate of the beam. Using the first beam as an example, the busy rate of the first beam may indicate a degree of resource busyness on the first beam in the first time window. The degree of resource busyness in the first time window is similar to the CBR mentioned above. For example, the degree of resource busyness in the first time window may be a proportion of resources whose RSSI is greater than a certain RSSI threshold in the first time window to the resources in the first time window. Using the first time window [n - a, n - 1] as an example, the busy rate of the first beam may be a ratio of resources whose RSSI exceeds the RSSI threshold in the first beam direction within [n - a, n - 1] to the total number of measured resources.

S302: The first terminal apparatus determines the first information based on the busy rate of the first beam.

For the first beam, the first terminal apparatus may measure the busy rate of the first beam to determine whether the first beam fails. When the busy rate of the first beam is higher than or equal to a certain threshold (for example, a first threshold), it may be determined that the measurement result indicates a failure of the first beam. To avoid misjudgment, the first terminal apparatus may measure the busy rate of a beam for multiple times, and when the busy rate of the first beam is higher than or equal to the first threshold for a relatively large number of times, it may be considered that the first beam fails. The first threshold may be considered as a busy rate threshold for determining whether the first beam fails, and the first threshold may be (pre)configured or predefined. For example, the network device may configure the first threshold through higher layer signaling "add CBR-thresholdConfig". The first threshold may be fixed, or may change dynamically.

After the first terminal apparatus determines the busy rate of the first beam, the first information may be determined based on the busy rate of the first beam, to determine whether the first beam fails. Whether the first beam fails may be determined by the first terminal apparatus, or may be determined by the second terminal apparatus. The first information may vary according to the entity that determines whether the first beam fails, and includes but is not limited to the following cases.

**Case A:** When the busy rate of the first beam is higher than or equal to the first threshold, the first information is used to indicate that the busy rate of the first beam is higher than or equal to the first threshold. In case A, each time the first terminal apparatus measures the busy rate of the first beam, the first terminal apparatus compares the obtained busy rate with the first threshold, and when the obtained busy rate is higher than or equal to the first threshold, sends the first information to the second terminal apparatus; or when the obtained busy rate is lower than the first threshold, the first terminal apparatus does not need to send any information to the second terminal apparatus.

In this case, the second terminal apparatus accumulates the number of times the first information is received. When the number of times the second terminal apparatus receives the first information within a preset time length is greater than or equal to a first value, the second terminal apparatus considers that the first beam fails. The preset time length may be used as a time length for beam failure detection, and the preset time length may be (pre)configured or agreed upon. For example, the preset time length may be a timing duration of a beam failure detection timer (beamFailureDetectionTimer). The first value may also be (pre)configured or agreed upon. For example, the first value may be a beam failure instance count (beamFailureInstanceMaxCount). The first information may be signaling specifically used to indicate that the busy rate of the first beam is higher than or equal to the first threshold, and the second terminal apparatus considers that the busy rate of the first beam is higher than or equal to the first threshold when receiving the first information. Alternatively, the first information may be carried by 1-bit information. For example, the 1-bit information may have a value of 0 or 1, and may be used to indicate that the busy rate of the first beam is higher than or equal to the first threshold.

In case A, the first terminal apparatus does not need to determine whether the first beam fails, and only needs to notify the second terminal apparatus when the busy rate of the first beam is higher than or equal to the first threshold. Therefore, this can reduce processing complexity of the first terminal apparatus and save energy consumption. In addition, in case A, the second terminal apparatus performs counting on the received first information, and the impact of a failed transmission of the first information on the second terminal apparatus determining whether the first beam fails is relatively low. Therefore, this can reduce a probability of incorrectly determining whether the first beam fails.

**In case B**, when the number of times that the busy rate of the first beam is higher than or equal to the first threshold within the preset time length is higher than or equal to the first value, the first information indicates that the first beam fails. The preset time length may be (pre)configured or agreed upon, and the first value may also be (pre)configured or agreed upon.

The difference from case A is that in case B, the first terminal apparatus determines whether the first beam fails, and when the first beam fails, notifies the second terminal apparatus of the failure. For example, the first terminal apparatus measures the busy rate of the first beam for a plurality of times, and compares the obtained busy rate with the first threshold. When the obtained busy rate is higher than or equal to the first threshold, the first terminal apparatus triggers the physical layer to report a beam failure indication (beam failure indication, BFI) to the MAC layer for this time. The first terminal apparatus records this BFI. If the number of times that the busy rate of the first beam is higher than or equal to the first threshold within the preset time length is higher than or equal to the first value, the first terminal apparatus sends the first information to the second terminal apparatus, where the first information indicates that the first beam fails. The preset time length may be (pre)configured or agreed upon, for example, the preset time length may be a time length of a beam failure detection timer. The first value may also be (pre)configured or agreed upon, for example, the first value may be a quantity of beam failure instances.

The first information may be a 1-bit beam failure identifier, which is carried on an SCI or a sidelink data channel and sent to the second terminal apparatus along with the CSI-RS/SSB beam. In case B, the second terminal apparatus may directly determine the first beam failure based on the first information, thereby reducing processing complexity of the second terminal apparatus and saving energy consumption.

**In case C**, the first information is a busy rate of the first beam.

After the first terminal apparatus measures the first beam each time and obtains the busy rate of the first beam, the first terminal apparatus may send the busy rate to the second terminal apparatus. The second terminal apparatus receives the busy rate of the first beam, and compares the busy rate with the first threshold. When the obtained busy rate is higher than or equal to the first threshold, the second terminal apparatus triggers a physical layer to report a MAC layer beam failure indication (beam failure indication, BFI) for this time. The second terminal apparatus records this BFI. If the number of times that the busy rate of the first beam is higher than or equal to the first threshold within a preset time length is higher than or equal to a first value, the second terminal apparatus determines that the first beam fails. The preset time length may be (pre)configured or agreed upon. For example, the preset time length may be a time length of a beam failure detection timer. The first value may also be (pre)configured or agreed upon. For example, the first value may be a quantity of beam failure instances. In case C, the first terminal apparatus directly sends the obtained busy rate to the second terminal apparatus, without the need to determine whether the busy rate of the first beam is higher than or equal to the first threshold, thereby reducing processing complexity.

S303: The first terminal apparatus sends first information to the second terminal apparatus.

After the first terminal apparatus determines the first information, it sends the first information to the second terminal apparatus. Correspondingly, the second terminal apparatus receives the first information from the first terminal apparatus. The second terminal apparatus determines whether the first beam has failed based on the first information. When the second terminal apparatus determines that the first beam has failed, it initiates a beam failure recovery procedure.

S304: The second terminal apparatus sends a beam failure recovery request to the first terminal apparatus on the first resource.

S305: The first terminal apparatus sends a response message for the beam failure recovery request to the second terminal apparatus.

When the second terminal apparatus determines that the first beam has failed, it may request beam failure recovery from the first terminal apparatus. The second terminal apparatus may select resources on a beam with a lower busy rate to send a beam failure recovery request, thereby improving the transmission reliability of the beam failure recovery request as much as possible and increasing the success rate of beam recovery. For example, the second terminal apparatus may send a beam failure recovery request to the first terminal apparatus on a first resource, where the first resource is associated with a second beam. The busy rate of the second beam is lower than a second threshold, or the second beam is a beam without any failure. The second threshold may be the same as the first threshold, or they may be different; for instance, the second threshold may be lower than the first threshold.

Optionally, after (pre)configuring the association relationship between the (pre)configured beam and the resource used to send the beam failure recovery request, the first resource associated with the second beam may be determined based on this association relationship. The resource used to send the beam failure recovery request may be a CSI-RS resource or an SSB resource, which is not specifically limited in this application.

After the second terminal apparatus sends the beam failure recovery request, it detects a response message (also referred to as a beam failure recovery response message) from the first terminal apparatus in response to the beam failure recovery request within a detection window following the first resource. This detection window may be configured by higher layers. Additionally, after sending the beam failure recovery request, the second terminal apparatus may start a beam failure recovery timer (beamFailureRecoveryTimer). If the second terminal apparatus does not successfully receive the beam failure recovery response message from the first terminal apparatus before the beam failure recovery timer expires, the second terminal apparatus reports a failure in the beam failure recovery request. If the second terminal apparatus successfully receives the beam failure recovery response message from the first terminal apparatus before the beam failure recovery timer expires, the beam failure recovery is successful, and the beam failure recovery timer is stopped.

In the communication method 300, an example is provided where a first beam fails, and the second terminal apparatus initiates a beam failure recovery process to the first terminal apparatus. It may be understood that if a beam A in the first beam set fails, and the beam A is used for communication between the first terminal apparatus and the terminal apparatus A, then the behavior of the terminal apparatus A is consistent with the behavior of the second terminal apparatus. When the terminal apparatus A determines that the beam A fails, the terminal apparatus A initiates a beam failure recovery process to the first terminal apparatus. It can be seen that in the communication method 300, even if the first terminal apparatus has multiple SLs, beam failure detection is performed based on the busy rate of resources in the beam domain, and there is no need to configure multiple sets of reference signal resources dedicated to BFD, thereby saving system resources and improving resource utilization of the entire system.

In the communication method 300, an example is provided where the second terminal apparatus initiates a beam failure recovery process to the first terminal apparatus through an optimal beam after determining that the transmit beam of the first terminal apparatus fails. Similarly, the second terminal apparatus may also determine whether its own receive beam fails, so that after determining that a receive beam fails, the second terminal apparatus initiates a beam failure recovery process to the first terminal apparatus through an optimal beam.

Taking an example where the second terminal apparatus uses the receive beam set as the third beam set, the second terminal apparatus may determine the busy rate of the third beam in the third beam set, and determine whether the third beam fails based on the busy rate of the third beam. When the third beam fails, the second terminal apparatus may send a beam failure recovery request to the first terminal apparatus through the second resource associated with the fourth beam. Here, the fourth beam is a beam that does not fail, for example, the busy rate of the fourth beam is lower than a second threshold.

For how the second terminal apparatus determines whether the third beam fails based on the busy rate of the third beam, reference may be made to the manner in which the first terminal apparatus determines whether the first beam fails based on the busy rate of the first beam, as described above, and details will not be repeated herein.

In the embodiments provided in the foregoing of this application, the method provided in the embodiments of this application is described by using an example in which the first terminal apparatus and the second terminal apparatus perform the method. In this application, the embodiments may be implemented independently or in combination based on some internal connections; in each embodiment, different implementations may be implemented in combination or independently. To implement the functions in the methods provided in the foregoing embodiments of this application, the first terminal device may include a hardware structure and/or a software module, and implement the foregoing functions in the form of a hardware structure, a software module, or a combination of a hardware structure and a software module. Whether a particular one of the foregoing functions is performed through the hardware structure, the software module, or the combination of the hardware structure and the software module depends on particular applications and design constraints of the technical solutions.

Based on the same inventive concept as the method embodiments, an embodiment of this application provides a communication apparatus. The following describes, with reference to the accompanying drawings, a communication apparatus used to implement the foregoing methods in embodiments of this application. The content above may be used in subsequent embodiments, and repeated content is not described again.

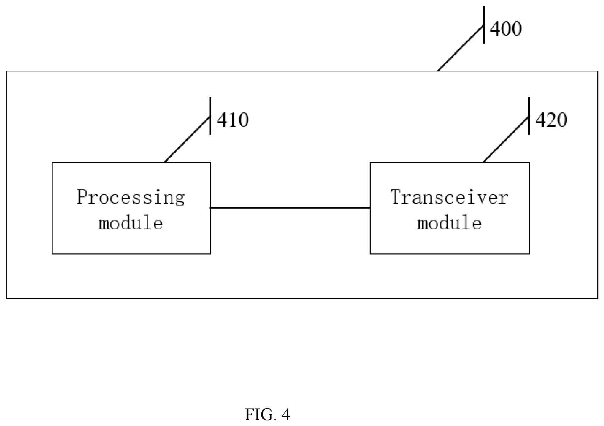

FIG. 4 is a schematic block diagram of a communication apparatus 400 according to an embodiment of this application. The communication apparatus 400 may be the terminal device in the foregoing embodiments. For example, the communication apparatus 400 may be the terminal apparatus 1, the terminal apparatus 2, or the terminal apparatus 3 in FIG. 1; or the communication apparatus 400 is a chip (system) in a terminal device or a chip (system) in a core network device; or the communication apparatus 400 is a software module in a terminal device. The communication apparatus 400 may correspondingly implement the functions or steps performed by the first terminal apparatus or the second terminal apparatus in the foregoing method embodiments. The communication apparatus 400 may include a processing module 410 and a transceiver module 420. Optionally, the communication apparatus 400 may further include a storage module, which may be configured to store instructions (code or a program) and/or data. The storage module may be, for example, a memory. The processing module 410 and the transceiver module 420 may be coupled to the storage module. For example, the processing module 410 may read instructions (code or a program) and/or data in the storage module, to implement a corresponding method. When the communication apparatus 400 is a chip in a terminal device, the storage module may be a storage module within the chip, such as a register or a cache. For example, the storage module may alternatively be a storage module outside the chip and inside the terminal device, such as a read-only memory (read-only memory, ROM), another type of static storage device that can store static information and instructions, a random access memory (random access memory, RAM), or the like. The foregoing units may be disposed independently, or some or all of them may be integrated.

The processing module 410 may be a processor or a controller, for example, may be a general-purpose central processing unit (central processing unit, CPU), a general-purpose processor, a digital signal processor (digital signal processing, DSP), an application-specific integrated circuit (application specific integrated circuits, ASIC), a field programmable gate array (field programmable gate array, FPGA) or another programmable logic device, a transistor logic device, a hardware component, or any combination thereof. The processing module may implement or perform various example logical blocks, modules, and circuits described with reference to the content disclosed in this application. The processor may also be a combination of components that implement a computing function, for example, a combination of one or more microprocessors, or a combination of a DSP and a microprocessor. The transceiver module 420 is a transceiver, an interface circuit, a bus, a pin, or another possible communication interface, and is configured to receive a signal from another apparatus. For example, when the apparatus is implemented as a chip, the transceiver module 420 is an interface circuit of the chip for receiving a signal from another chip or apparatus, or an interface circuit of the chip for sending a signal to another chip or apparatus.

In an implementation, the communications apparatus 400 can correspondingly implement the behavior and functions of the first terminal apparatus in the foregoing method embodiments. The communications apparatus 400 may be a terminal device, or may be a component (for example, a chip or a circuit) applied to a terminal device, or may be a chip or a chip set in the terminal device, or may be a part of a chip used to perform a function of the related method, or may be a software module that can implement the method (for example, the communication method 300) performed by the first terminal apparatus in the foregoing method, which is not limited. For details, refer to related content in the foregoing method embodiments, and details are not described herein again.

For example, the processing module 410 is configured to determine a busy rate of a first beam in the first beam set, and determine the first information based on the busy rate. The first beam is used for communication between the communications apparatus 400 and the second terminal apparatus, or the communications apparatus 400 may communicate with the second terminal apparatus by using the first beam. The busy rate of the first beam is used to indicate a resource busyness degree of a first time window on the first beam. The first information is used to determine whether the first beam fails. The transceiver module 420 is configured to send the first information to the second terminal apparatus.

In an optional implementation, that the processing module 410 determines the first information based on the busy rate includes: when the busy rate is higher than or equal to the first threshold, the first information is used to indicate that the busy rate is higher than or equal to the first threshold.

In an optional implementation, the determining, by the processing module 410, the first information based on the busy rate includes: when the busy rate is higher than or equal to the first threshold for a quantity of times that is higher than or equal to a first value within preset duration, the first information indicates a first beam failure.

In an optional implementation, the first information is a busy rate of the first beam.

In an optional implementation, the transceiver module 420 is further configured to receive configuration information, where the configuration information is used to indicate the first beam set.

In an optional implementation, the transceiver module 420 is further configured to send a reference signal by using a beam in the first transmit beam set; and receive information about a second transmit beam set sent by a second terminal apparatus, and send a reference signal by using a beam in the second transmit beam set, where the second transmit beam set is formed by some beams in the first transmit beam set. The processing module 410 is further configured to obtain a measurement result for at least one beam in the second transmit beam set, and determine the first beam set from the at least one beam based on the measurement result.

As an optional implementation, the transceiver module 420 is further configured to receive a beam failure recovery request from the second terminal apparatus on a first resource, and send a response message to the beam failure recovery request to the second terminal apparatus. Herein, the first resource is associated with the second beam, and the busy rate of the second beam is lower than the second threshold.

In an implementation, the communication apparatus 400 can correspondingly implement the actions and functions of the second terminal apparatus in the foregoing method embodiments. The communication apparatus 400 may be a terminal device, or may be a component (for example, a chip or a circuit) applied in a terminal device, or may be a chip or chipset in the terminal device or a part of a chip used to perform a function of the related method, or may be a software module capable of implementing the method (for example, the communication method 300) performed by the terminal device in the foregoing method, which is not limited. For details, refer to the related content in the foregoing method embodiments, and details are not described herein again.

For example, the transceiver module 420 is configured to receive first information from a first terminal apparatus, where the first information is related to a busy rate of a first beam, the busy rate is used to indicate a resource busyness degree within a first time window on the first beam, and the first beam is used for communication between the first terminal apparatus and a second terminal apparatus. The processing module 410 is configured to determine whether the first beam fails based on the first information.

In an optional implementation, the first information indicates that the busy rate of the first beam is higher than or equal to the first threshold, and the determining, by the processing module 410, whether the first beam fails based on the first information includes: when the number of times that the transceiver module 420 receives the first information is greater than or equal to a first value, determining that the first beam fails.

In an optional implementation, the first information indicates that the first beam fails.

In an optional implementation, the first information is the busy rate, and the determining, by the processing module 410, whether the first beam fails based on the first information includes: when the number of times that the busy rate received by the transceiver module 420 is higher than or equal to the first threshold within the preset duration is greater than or equal to a first value, determining that the first beam fails.

In an optional implementation, the transceiver module 420 is further configured to receive configuration information, where the configuration information is used to indicate a first beam set, and the first beam set includes the first beam.

In an optional implementation, the processing module 410 is further configured to: measure a first transmit beam set of the first terminal apparatus, and determine a second transmit beam set from the first transmit beam set based on a measurement result, where the second transmit beam set includes some beams in the first transmit beam set; measure the second transmit beam set, and determine at least one beam from the second transmit beam set based on a measurement result; and measure each beam in the at least one beam by using different receive beams of the second terminal apparatus, and determine the first beam set from the at least one beam based on the measurement results.

As an optional implementation, the transceiver module 420 is further configured to send a beam failure recovery request to the first terminal apparatus on a first resource, and detect a beam failure recovery response from the first terminal apparatus. The first resource is associated with a second beam, where the busy rate of the second beam is below a second threshold.

As an optional implementation, the processing module 410 is further configured to determine a busy rate of a third beam in a third beam set, where the busy rate of the third beam indicates a degree of resource busyness within a first time window on the third beam, and the third beam set is a set of receive beams of the communication apparatus 400; the transceiver module 420 is further configured to, when the number of times that the busy rate of the third beam is greater than or equal to a first threshold within a preset duration is greater than or equal to a first value, send a beam failure recovery request to the first terminal apparatus on a second resource, where the second resource is associated with a fourth beam, and the busy rate of the fourth beam is below a second threshold.

For another example, the processing module 410 is configured to determine a busy rate of a third beam in a third beam set, where the busy rate of the third beam indicates a degree of resource busyness within a first time window on the third beam, and the third beam set is a set of receive beams of the communication apparatus 400; the transceiver module 420 is further configured to, when the number of times that the busy rate of the third beam is greater than or equal to a first threshold within a preset duration is greater than or equal to a first value, send a beam failure recovery request to the first terminal apparatus on a second resource, where the second resource is associated with a fourth beam, and the busy rate of the fourth beam is below a second threshold.

When the communication apparatus 400 is a chip-level device or circuit, the transceiver module may be an input/output circuit and/or a communication interface; and the processing module is an integrated processor, microprocessor, or integrated circuit.

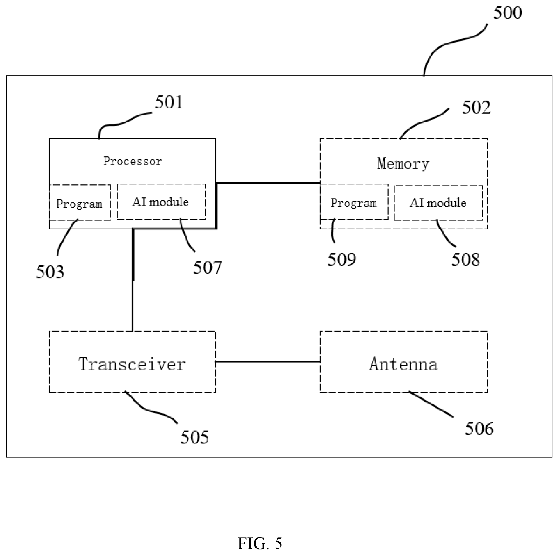

FIG. 5 is a schematic block diagram of a communication apparatus 500 according to an embodiment of this application. The communication apparatus 500 may be the first terminal apparatus or the second terminal apparatus in the foregoing embodiments. For example, the communication apparatus 500 may be the terminal apparatus 1, the terminal apparatus 2, or the terminal apparatus 3 in FIG. 1; or the communication apparatus 500 is a terminal device or a chip (system) in a terminal device. In the embodiments of this application, the chip system may include a chip, or may include a chip and other discrete components. For specific functions, refer to the descriptions in the foregoing method embodiments.

The communication apparatus 500 includes one or more processors 501 configured to implement or support the communication apparatus 500 in implementing the functions of the first terminal apparatus or the second terminal apparatus in the method provided in the embodiments of this application. For specific details, refer to the detailed descriptions in the method examples, and details are not repeated herein. The processor 501 may also be referred to as a processing unit or a processing module, and may implement certain control functions. The processor 501 may be a general-purpose processor, a dedicated processor, or the like. For example, the processor may include a baseband processor, a central processing unit, an application processor, a modem processor, a graphics processing unit, an image signal processor, a digital signal processor, a video codec processor, a controller, a memory, and/or a neural network processor. The baseband processor may be configured to process communication protocols and communication data. The central processing unit may be configured to control the communication apparatus 500 (for example, a network apparatus or a terminal apparatus), execute software programs, and/or process data. Different processors may be independent components, or may be integrated into one or more processors, for example, integrated into one or more application-specific integrated circuits.

In one design, the processor 501 may include a program 503 (which may sometimes also be referred to as code or instructions), which may be executed on the processor 501, so that the communication apparatus 500 performs the methods described in the following embodiments. In another possible design, the communication apparatus 500 includes a circuit (not shown in Figure 5), which is configured to implement the functions of the first terminal apparatus or the second terminal apparatus in the foregoing embodiments.

In one design, the communication apparatus 500 may include one or more memories 502, which store a program 509 (which may sometimes also be referred to as code or instructions), where the program 509 may be executed on the processor 501, so that the communication apparatus 500 performs the methods described in the foregoing method embodiments, for example, the procedure shown in FIG. 3.

In one design, the processor 501 and/or the memory 502 may include an artificial intelligence (AI) module 507 and an AI module 508, where the AI modules are configured to implement AI-related functions. The AI module may be implemented through software, hardware, or a combination of software and hardware. For example, the AI module may include a RAN Intelligent Controller (RIC) module. For instance, the AI module may be an almost real-time RIC or a non-real-time RIC.

In a possible design, the processor 501 and/or the memory 502 may further store data. The processor and the memory may be separately disposed, or may be integrated together.

In a possible design, the communication apparatus 500 may further include a transceiver 505 and/or an antenna 506. The processor 501 may sometimes also be referred to as a processing unit, and controls the communication apparatus 500. The transceiver 505 may sometimes also be referred to as a transceiver unit, a transceiver machine, a transceiver circuit, a transceiver, or the like, and is configured to implement a receiving and sending function of the communication apparatus by using the antenna 506.

In a possible design, the communication apparatus 500 may further include one or more of the following components: a wireless communications module, an audio module, an external memory interface, an internal memory, a universal serial bus (universal serial bus, USB) interface, a power management module, an antenna, a speaker, a microphone, an input/output module, a sensor module, a motor, a camera, a display screen, or the like. It may be understood that in some embodiments, the communication apparatus 500 may include more or fewer components, or some components may be integrated, or some components may be split. These components may be implemented by hardware, software, or a combination of software and hardware.

The communication apparatus in the foregoing embodiments may be a terminal device, may be a circuit, or may be a chip applied to a terminal device or another combined component or part that has the foregoing terminal device. When the communication apparatus is a terminal device, the transceiver module may be a transceiver, and may include an antenna, a radio frequency circuit, and the like; and the processing module may be a processor, for example, a CPU. When the communication apparatus is a chip system, the communication apparatus may be an FPGA, an application-specific ASIC, a system on chip (system on chip, SoC), a CPU, a network processor (network processor, NP), a DSP, a micro controller unit (micro controller unit, MCU), a programmable logic device (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to receive code instructions (the code instructions are stored in a memory, and may be directly read from the memory, or may be read from the memory through another device) and transmit the code instructions to the processor; and the processor may be configured to run the code instructions to perform the method in the foregoing method embodiments. For another example, the interface circuit may also be a signal transmission interface circuit between a communication processor and a transceiver.

An embodiment of this application further provides a communications system. Specifically, the communications system includes a plurality of terminal apparatuses. For example, the communications system includes a plurality of first terminal apparatuses and second terminal apparatuses used to implement functions related to the communication method 300. For details, refer to the related descriptions in the foregoing method embodiments. Details are not described herein again.

An embodiment of this application further provides a computer-readable storage medium, including an instruction. When the instruction is run on a computer, the computer is enabled to perform the method performed by the first terminal apparatus or the second terminal apparatus in the foregoing communication method 300.

An embodiment of this application further provides a computer program product, including computer program code. When the computer program code is executed, a computer is enabled to perform the method performed by the first terminal apparatus or the second terminal apparatus in the foregoing communication method 300.

An embodiment of this application further provides a chip system. The chip system includes a processor, and may further include a memory, configured to implement functions of the first terminal apparatus or the second terminal apparatus in the foregoing method. The chip system may include a chip, or may include a chip and another discrete component.

To implement the functions of the communication apparatuses shown in FIG. 4 to FIG. 5, an embodiment of this application further provides a chip, including a processor, configured to support the communication apparatus in implementing the functions of the first terminal apparatus or the second terminal apparatus in the foregoing method embodiments. In a possible design, the chip is connected to a memory, or the chip includes a memory, where the memory is configured to store a computer program, instructions, and data necessary for the communication apparatus.

It should be understood that sequence numbers of the foregoing processes do not mean execution sequences in various embodiments of this application. The execution sequences of the processes should be determined according to functions and internal logic of the processes, and should not constitute any limitation on implementation processes of embodiments of this application.

A person of ordinary skill in the art may be aware that, in combination with illustrative logical blocks (illustrative logical block) and steps (step) described in embodiments disclosed in this specification, the functions may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing described system, apparatus, and unit, refer to a corresponding process in the foregoing method embodiments, and details are not described herein again.

In the embodiments provided in this application, it should be understood that the disclosed systems, apparatuses, and methods may be implemented in other ways. For example, the foregoing apparatus embodiments are merely examples. For example, the division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, may be located in one place, or may be distributed on a plurality of network units. Some or all of the units may be selected according to an actual need to achieve the objectives of the solutions in the embodiments.

When the functions are implemented in the form of software functional units and sold or used as an independent product, they may be stored in a computer-readable storage medium. Based on such an understanding, the technical solutions of this application essentially contribute to the part or some of the technical solutions that are implemented in the form of a software product. This computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a RAM, a magnetic disk, or an optical disc.

It is clear that a person skilled in the art can make various modifications and variations to this application without departing from the scope of this application. Therefore, if these modifications and variations of this application fall within the scope of the claims of this application and their equivalent technologies, this application is also intended to cover these modifications and variations.

## Claims

1. A communication method, applied to a first terminal apparatus, comprising:
determining a busy rate of a first beam in a first beam set, wherein the busy rate indicates a resource busyness degree of a first time window on the first beam, and the first beam is used for communication between the first terminal apparatus and a second terminal apparatus;
determining first information based on the busy rate, wherein the first information is used to determine whether the first beam fails;
sending the first information to the second terminal apparatus.

2. The method according to claim 1, wherein the determining first information based on the busy rate comprises:
when the busy rate is higher than or equal to a first threshold, the first information is used to indicate that the busy rate is higher than or equal to the first threshold.

3. The method according to claim 1, wherein the determining first information based on the busy rate comprises:
the number of times that the busy rate is higher than or equal to a first threshold within a preset time length is greater than or equal to a first value, and the first information indicates the first beam failure.

4. The method according to claim 1, wherein the first information is the busy rate.

5. The method according to claim 2 or 3, wherein the first threshold is (pre)configured or predefined.

6. The method according to any one of claims 1 to 5, wherein the method further comprises:
receiving configuration information, wherein the configuration information is used to indicate the first beam set.

7. The method according to any one of claims 1 to 5, wherein the method further comprises:
sending a reference signal by using a beam in a first transmit beam set;
receiving information about a second transmit beam set sent by the second terminal apparatus, and transmitting a reference signal through a beam in the second transmit beam set, wherein the second transmit beam set is composed of some beams from the first transmit beam set;
obtaining measurement results for at least one beam in the second transmit beam set, and determining the first beam set from the at least one beam based on the measurement results.

8. The method according to any one of claims 1 to 7, wherein the method further comprises:
receiving a beam failure recovery request from the second terminal apparatus on a first resource, wherein the first resource is associated with a second beam, and a busy rate of the second beam is below a second threshold;
send a response message for the beam failure recovery request to the second terminal apparatus.

9. A communication method, applied to a second terminal apparatus, comprising:
receiving first information from a first terminal apparatus, wherein the first information is used to determine whether a first beam fails, the first information is related to a busy rate of the first beam, the busy rate is used to indicate a resource busyness degree in a first time window on the first beam, and the first beam is used for communication between the first terminal apparatus and the second terminal apparatus;
determining whether the first beam fails based on the first information.

10. The method according to claim 9, wherein the first information indicates that the busy rate of the first beam is higher than or equal to a first threshold, and the determining whether the first beam fails based on the first information comprises:
determining that the first beam fails when a quantity of times the first information is received is greater than or equal to a first value.

11. The method according to claim 9, wherein the first information indicates a failure of the first beam.

12. The method according to claim 9, wherein the first information is the busy rate, and the determining whether the first beam fails based on the first information comprises:
determining that the first beam fails when the number of times when the received busy rate is higher than or equal to the first threshold within a preset time length is greater than or equal to a first value.

13. The method according to claim 12, wherein the first threshold is (pre)configured or predefined.

14. The method according to any one of claims 9 to 13, wherein the method further comprises:
receiving configuration information, wherein the configuration information is used to indicate a first beam set, and the first beam set comprises the first beam.

15. The method according to any one of claims 9 to 13, wherein the method further comprises:
measuring a first transmit beam set of the first terminal apparatus, and determining a second transmit beam set from the first transmit beam set based on a measurement result, wherein the second transmit beam set comprises some beams in the first transmit beam set;
measuring the second transmit beam set, and determining at least one beam from the second transmit beam set based on a measurement result;
measuring each of the at least one beam by using different receive beams of the second terminal apparatus, and determining the first beam set from the at least one beam based on measurement results.

16. The method according to any one of claims 9 to 15, wherein the method further comprises:
sending a beam failure recovery request to the first terminal apparatus on a first resource, wherein the first resource is associated with a second beam, and a busy rate of the second beam is below a second threshold;
detecting a beam failure recovery response from the first terminal apparatus.

17. The method according to any one of claims 10-16, wherein the method further comprises:
determining a busy rate of a third beam in a third beam set, wherein the busy rate of the third beam indicates a degree of resource busyness on the third beam within a first time window, and the third beam set is a set of receive beams of the second terminal apparatus;
when the number of times that the busy rate of the third beam is greater than or equal to the first threshold within the preset duration is greater than or equal to a first value, sending a beam failure recovery request to the first terminal apparatus on a second resource, wherein the second resource is associated with a fourth beam, and the busy rate of the fourth beam is below a second threshold.

18. A communication apparatus, comprising:
a processing module, configured to determine a busy rate of a first beam in a first beam set, and determine first information based on the busy rate, wherein the busy rate indicates a resource busyness degree of a first time window on the first beam, the first beam is used for communication between the communication apparatus and a second terminal apparatus, and the first information is used to determine whether the first beam fails;
The transceiver module is configured to send the first information to the second terminal apparatus.

19. The apparatus according to claim 18, wherein the processing module is specifically configured to:
when the busy rate is higher than or equal to a first threshold, determining that the first information is used to indicate that the busy rate is higher than or equal to the first threshold.

20. The apparatus according to claim 18, wherein the processing module is specifically configured to:
when the number of times that the busy rate is higher than or equal to the first threshold within the preset duration is greater than or equal to a first value, determine that the first information indicates the first beam fails.

21. The apparatus according to claim 18, wherein the first information is the busy rate.

22. The apparatus according to claim 19 or 20, wherein the first threshold is (pre)configured or predefined.

23. The apparatus according to any one of claims 18 to 22, wherein the transceiver module is further configured to:
receive configuration information, wherein the configuration information is used to indicate the first beam set.

24. The apparatus according to any one of claims 18 to 22, wherein
the transceiver module is further configured to: send a reference signal by using a beam in a first transmit beam set, receive information about a second transmit beam set sent by the second terminal apparatus, and send a reference signal by using a beam in the second transmit beam set, wherein the second transmit beam set is formed by some beams in the first transmit beam set;
the processing module is further configured to obtain a measurement result for at least one beam in the second transmit beam set, and determine the first beam set from the at least one beam based on the measurement result.

25. The apparatus according to any one of claims 18 to 24, wherein the transceiver module is further configured to:
receiving a beam failure recovery request from the second terminal apparatus on a first resource, wherein the first resource is associated with a second beam, and a busy rate of the second beam is below a second threshold;
send a response message for the beam failure recovery request to the second terminal apparatus.

26. A communication apparatus, comprising:
a transceiver module, configured to receive first information from a first terminal apparatus, wherein the first information is used to determine whether a first beam fails, the first information is related to a busy rate of the first beam, the busy rate indicates a degree of resource busyness in a first time window on the first beam, and the first beam is used for communication between the first terminal apparatus and the second terminal apparatus;
a processing module, configured to determine whether the first beam fails based on the first information.

27. The apparatus according to claim 26, wherein the first information indicates that a busy rate of the first beam is higher than or equal to a first threshold, and the determine whether the first beam fails based on the first information comprises:
determine that the first beam fails when the number of times the first information is received is greater than or equal to a first value.

28. The apparatus according to claim 26, wherein the first information indicates that the first beam fails.

29. The apparatus according to claim 26, wherein the first information is the busy rate, and the processing module is specifically configured to:
determine the first beam fails when the number of times that the received busy rate is higher than or equal to the first threshold is greater than or equal to a first value within the preset duration.

30. The apparatus according to claim 29, wherein the first threshold is (pre)configured or predefined.

31. The apparatus according to any one of claims 26 to 30, wherein the transceiver module is further configured to:
receive configuration information, wherein the configuration information is used to indicate a first beam set, and the first beam set comprises the first beam.

32. The apparatus according to any one of claims 26 to 30, wherein the processing module is further configured to:
measure the first transmit beam set of the first terminal apparatus, and determining a second transmit beam set from the first transmit beam set based on the measurement result, wherein the second transmit beam set consists of some beams from the first transmit beam set;
measure the second transmit beam set, and determining at least one beam from the second transmit beam set based on the measurement result;
measure each of the at least one beam in the second transmit beam set using different receive beams of the second terminal apparatus, and determining the first beam set from the at least one beam based on the measurement results.

33. The apparatus according to any one of claims 26 to 32, wherein the transceiver module is further configured to:
send a beam failure recovery request to the first terminal apparatus on a first resource, wherein the first resource is associated with a second beam, and a busy rate of the second beam is below a second threshold;
detect a beam failure recovery response from the first terminal apparatus.

34. The apparatus according to any one of claims 27 to 33, wherein the processing module is further configured to:
determine a busy rate of a third beam in a third beam set, wherein the busy rate of the third beam indicates a degree of resource busyness on the third beam within a first time window, and the third beam set is a set of receive beams of the second terminal apparatus;
When the number of times that the busy rate of the third beam is greater than or equal to a first threshold within a preset duration is greater than or equal to a first value, send a beam failure recovery request to the first terminal apparatus on a second resource, wherein the second resource is associated with a fourth beam, and the busy rate of the fourth beam is below a second threshold.

35. A communication apparatus, wherein the communication apparatus comprises a processor and a memory, the memory is configured to store a computer program, and the processor is configured to execute the computer program stored in the memory, so that the communication apparatus performs the method according to any one of claims 1 to 8, or so that the communication apparatus performs the method according to any one of claims 9 to 17.

36. A computer-readable storage medium, wherein the computer-readable storage medium is configured to store a computer program, and when the computer program is run on a computer, the computer is enabled to perform the method according to any one of claims 1 to 8, or the computer is enabled to perform the method according to any one of claims 9 to 17.

37. A computer program product, wherein the computer program product comprises a computer program, and when the computer program is run on a computer, the computer is enabled to perform the method according to any one of claims 1 to 8, or the computer is enabled to perform the method according to any one of claims 9 to 17.

38. A chip system, wherein the chip system comprises:
a processor and an interface, wherein the processor is configured to invoke and run an instruction from the interface, and when the processor executes the instruction, the method according to any one of claims 1 to 8 is implemented, or the method according to any one of claims 9 to 17 is implemented.
